Europäisches Patentamt

European Patent Office

Office européen des brevets

(19)

(11) Veröffentlichungsnummer: **0 254 282 B1**

(12) **EUROPÄISCHE PATENTSCHRIFT**

(45) Veröffentlichungstag der Patentschrift: **07.10.92**

(51) Int. Cl.⁵: **G01N 21/53**, G01N 21/33

(21) Anmeldenummer: **87110573.0**

(22) Anmeldetag: **21.07.87**

(54) **Spektralanalytisches Gasmessgerät.**

(30) Priorität: **21.07.86 DE 3624567**

(43) Veröffentlichungstag der Anmeldung:
**27.01.88 Patentblatt 88/04**

(45) Bekanntmachung des Hinweises auf die
Patenterteilung:
**07.10.92 Patentblatt 92/41**

(84) Benannte Vertragsstaaten:
**BE CH DE ES FR GB IT LI NL**

(56) Entgegenhaltungen:
**US-A- 3 790 290**
**US-A- 4 126 396**

**TECHNISCHES MESSEN T.M., Band 50, Nr. 11,
November 1983, Seiten 429-432, München,
DE; G. FETZER et al.: "In-situ-Messung von
Staubemissionen"**

(73) Patentinhaber: **Erwin Sick GmbH Optik-
Elektronik
Sebastian-Kneipp-Strasse 1
W-7808 Waldkirch(DE)**

(72) Erfinder: **Fetzer, Günter, Dipl.-Ing. (FH)
Sonnhalde 97a
W-7803 Gundelfingen(DE)**
Erfinder: **Kaufmann, Jürgen, Dipl.-Ing. (FH)
Emmendinger Strasse 14
W-7819 Denzlingen(DE)**
Erfinder: **Schneider, Hans-Jürgen, Dipl.-Ing.
(FH)
Wiesenstrasse 78
W-7830 Emmendingen(DE)**
Erfinder: **Strohbusch, Frank, Dr. Prof. Dr.
Ricarda-Huch-Strasse 13
W-7819 Denzlingen(DE)**

(74) Vertreter: **Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)**

EP 0 254 282 B1

## Beschreibung

Die Erfindung betrifft ein spektralanalytisches Gasmeßgerät der im Oberbegriff des Patentanspruchs 1 angegebenen Art.

Spektralanalytische Gasmeßgeräte werden z.B. an Abgaskaminen angeordnet, um die im Abgas enthaltenen schädlichen Gase, insbesondere $SO_2$ und NO hinsichtlich ihrer Menge zu bestimmen und so eine zu möglichst wenig Schadstoffen führende Regelung der Feuerung zu ermöglichen. Die hierbei verwendete Strahlung liegt im ultravioletten Wellenlängenbereich und umfaßt bevorzugt den zwischen 200 nm und 320 nm liegenden Spektralbereich.

Problematisch ist jedoch, daß ein derartiges Gasmeßgerät im allgemeinen nur einen ganz bestimmten Reichweitenbereich aufweist, so daß es nur für Anwendungen mit begrenzten Meßstreckenlängenbereichen geeignet ist.

Aus der US-A-37 90 290 ist ein Photometer der im Oberbegriff des Anspruchs 1 angegebenen Art zur Messung der Transmission, der Extinktion und der Remission von Gasen oder anderen zu untersuchenden Proben bekannt, bei dem eine Lichtquelle von einem Kondensor in eine Blende abgebildet wird. Das Bild der Lichtquelle in der Blende wird von einem Mikroobjektiv in ein weiteres Objektiv am Anfang einer Meßstrecke abgebildet, an deren Ende ein Retroreflektor angeordnet ist. Dabei ist zwischen dem Mikroobjektiv und dem weiteren Objektiv ein Strahlteiler vorgesehen, der das vom Retroreflektor über das weitere Objektiv zurückkommende Licht auf eine Photoempfangsanordnung lenkt.

Die Aufgabe der vorliegenden Erfindung besteht darin, ein weiteres Gasmeßgerät der eingangs genannten Art zu schaffen, insbesondere soll ein derartiges Gasmeßgerät bei kompaktem Aufbau und einfacher Herstellung sowie höchster optischer Genauigkeit problemlos auf zumindest zwei unterschiedliche Reichweitenbereiche eingestellt werden können.

Zur Lösung dieser Aufgabe sieht die Erfindung die im Kennzeichen des Anspruchs 1 angegebenen Merkmale vor.

Der Objektivreflektor ist dabei zweckmäßig auswechselbar, damit bei jeder Stellung und insbesondere bei den unterschiedlichen Stellungen des Umlenkspiegels Objektivreflektoren mit unterschiedlichen Brennweiten verwendet werden können. Wenn sich der Umlenkspiegel in der kondensornahen Stellung befindet, wird ein kurzbrennweitiger Objektivreflektor verwendet, während bei der kondensorfernen Stellung ein längerbrennweitiger Objektivreflektor zum Einsatz kommt.

Auf diese Weise ist es z.B. möglich, mit zwei kurzbrennweitigen Objektivreflektoren mit Brennweiten von z.B. 31 bzw. 40 cm und in der kondensornahen Stellung befindlichem Umlenkspiegel Reichweiten zwischen 0,85 m und 4,90 m zu erfassen, während mit z.B. zwei langbrennweitigen Objektivreflektoren mit einer Brennweite von z.B. 50 bzw. 61 cm und in der kondensorfernen Stellung befindlichem Umlenkspiegel ein weiterer Reichweitenbereich von 4,5 m bis 13 m erfaßt werden kann, wobei im ersten Fall der Strahldurchmesser 6 cm und im zweiten Fall 7 cm betragen kann.

Besonders wesentlich ist, daß für beide Reichweitenbereiche bis auf das ausgewechselte Objektiv, das jedoch an der gleichen Stelle verbleibt, exakt die gleichen optischen Bauteile verwendet werden können, wobei lediglich die mechanische Anordnung im Sinne der Erfindung zu verändern ist.

Die Kombination eines Autokollimations-Strahlungs-Sende-Empfangsgerätes mit einem Polychromator im Empfangsteil stellt einen wesentlichen Grundgedanken der Erfindung dar. Dabei ist es wichtig, daß im Sendestrahlengang in Form des Objektivreflektors ein dispersionsfreies Abbildungselement Verwendung findet, da auf diese Weise Verfälschungen der spektralen Messungen durch die Optik weitgehend vermieden werden. Die Verwendung eines als Hohlspiegel ausgebildeten Objektivreflektors bringt also außer dem kompakten Gesamtaufbau auch optische Vorteile.

Eine baulich besonders günstige Anordnung kennzeichnet sich dadurch, daß der Strahlenteiler im wesentlichen in Höhe der Strahlungsdurchtrittsöffnung angeordnet ist und der Umlenkspiegel sich in der ersten Stellung unmittelbar hinter dem Strahlenteilerspiegel befindet.

Zum gleichen Zweck ist vorzugsweise vorgesehen, daß das vom Sendekondensor zum Strahlenteiler und Umlenkspiegel verlaufende Strahlungsbündel einen Winkel von 20 bis 40 und insbesondere etwa 30° mit dem Austrittsstrahlungsbündel einschließt.

Hierbei ist es zweckmäßig, wenn die Seite des Gehäuses im Bereich der Anordnung des Umlenkspiegels ebenfalls den Winkel von 20 bis 40, insbesondere etwa 30° mit dem Austrittsstrahlungsbündel einschließt.

Einer baulich kompakten und wenig platzaufwendigen Anordnung ist es weiter dienlich, wenn der Umlenkspiegel in der ersten Stellung in Höhe des Nachführspiegels und vorzugsweise geringfügig höher als dieser angeordnet ist.

Hierfür ist es weiter zweckmäßig, wenn der Umlenkspiegel in der zweiten Stellung höher als der Nachführspiegel und zwischen dem Nachführspiegel und der Strahlungsdurchtrittsöffnung angeordnet ist.

Eine herstellungsmäßig günstige und auch von ungeübten Personen einfach justierbare Anordnung kennzeichnet sich dadurch, daß der Umlenkspiegel in einem in zwei Stellungen am Gehäuse fixierbaren Halter um die Kippachse verschwenkbar angeordnet ist.

Eine vorteilhafte Weiterbildung der Erfindung kennzeichnet sich dadurch, daß der Objektivreflektor und seine Halterung unterhalb des Nachführspiegels in der Weise angeordnet sind, daß der Reflexionswinkel am Objektivreflektor möglichst klein ist und bevorzugt 5 bis 7° beträgt.

Der Nachführspiegel ist zweckmäßigerweise in einer äußeren Haltevorrichtung angeordnet, die vorzugsweise in Richtung der Strahlungsdurchtrittsöffnung verschiebbar am Gehäuse angebracht ist.

Besonders vorteilhaft ist es, wenn eine zusätzliche Verstellmöglichkeit für den Nachführspiegel dadurch geschaffen wird, daß der Nachführspiegel in der äußeren Haltevorrichtung um zwei senkrecht aufeinanderstehende Stellachsen vorzugsweise durch eine Steuermotoranordnung verdrehbar angeordnet ist. Auf diese Weise kann das erfindungsgemäße Gasmeßgerät problemlos auf den am Ende der Meßstrecke vorgesehenen Reflektor ausgerichtet werden, der im allgemeinen als Retroreflektor ausgebildet ist.

Bevorzugt ist der Retroreflektor ein Einzeltripelspiegel zweckmäßigerweise mit davor angeordneter Linse, deren Brennweite gleich dem halben Abstand zwischen der Strahlungsdurchtrittsöffnung und dem Reflektor ist.

Um eine einwandfreie Verstellmöglichkeit für den Nachführspiegel zu gewährleisten, soll insbesondere vorgesehen sein, daß die eine Stellachse parallel zur erwähnten Kippachse verläuft und die andere Stellachse senkrecht auf der ersten Stellachse steht und parallel zur Oberfläche des Nachführ spiegels verläuft.

Weiter ist es zweckmäßig, wenn die Haltevorrichtung in zwei um 180° um die Hochachse verdrehten Stellungen im Gehäuse festlegbar ist. Dadurch wird erreicht, daß in der einen Stellung der Raum hinter dem Nachführspiegel, in der anderen der Raum über dem Nachführspiegel optimal für das Lichtbündel ausgenutzt werden kann.

Im Sinne einer kompakten Unterbringung auch des Polychromators sieht die Erfindung weiter vor, daß der Strahlteiler die gebündelte Empfangsstrahlung im wesentlichen parallel zu dem vom Umlenkspiegel in der ersten Stellung reflektierten Sendestrahlungsbündel zum Polychromator reflektiert. Dabei soll insbesondere vorgesehen sein, daß der Strahlenteiler die Empfangsstrahlung zu einem Empfangskondensor reflektiert, der den Objektivreflektor auf den Eintrittsspalt des Polychromators abbildet.

Damit sich sämtliche für die Hauptmessung verwendeten Lichtbündel in einer Ebene befinden, ist es weiter zweckmäßig, wenn das Gitter des Polychromators die Empfangsstrahlung in die gleiche Ebene abbeugt, in der auch alle sonstigen Strahlungsbündel verlaufen, und daß im Abstand des Eintrittsspaltes unter den Beugungswinkeln mehrere, die Photoempfangsanordnung bildende Photoempfänger angeordnet sind.

Zur automatischen Konzentrierung des Austrittsstrahlungsbündels auf den Reflektor ist nach einer zweckmäßigen Weiterbildung der Erfindung vorgesehen, daß sich in der Empfangsstrahlung vor dem Nachführspiegel vorzugsweise zwischem dem Strahlenteiler und dem Sendekondensor eine schräggestellte, entspiegelte Strahlenteilerplatte, insbesondere Quarzglasplatte befindet, welche die Empfangsstrahlung vorzugsweise senkrecht zur Ebene der Strahlungsbündel zu einem Vier-Quadranten-Photoelement auslenkt, das über eine Steuerschaltung den Nachführspiegel derart steuert, daß das Austrittsstrahlungsbündel zentral auf den Reflektor fällt.

Um auch noch den Staubgehalt auf der Meßstrecke feststellen zu können, sieht eine weitere Ausführungsform vor, daß im Empfangslicht nach dem Strahlenteiler vorzugsweise vor dem Empfangskondensor eine schräggestellte, für die durchzulassende Strahlung, insbesondere ultraviolettes Licht entspiegelte, sichtbares Licht reflektierende Strahlenteilerplatte, insbesondere Quarzglasplatte vorgesehen ist, welche den sichtbaren Teil der Empfangsstrahlung vorzugsweise senkrecht zur Ebene der Hauptstrahlungsbündel zu einem für sichtbares Licht empfindlichen Halbleiterdetektor auslenkt, der zur Staubgehaltsmessung dient.

Schließlich ist es für Eichungszwecke vorteilhaft, wenn in das Empfangsstrahlungsbündel hinter dem Strahlenteiler eine ein Meßgas enthaltende Referenzküvette einschwenkbar ist.

Eine besonders einfache Montage und Wartung sowie Reparatur wird gewährleistet, wenn die vorzugsweise als Deuteriumlampe ausgebildete Strahlungsquelle mit dem Sendekondensor zu einer vorjustierten Baueinheit zusammengebaut ist.

Um für die Messung eine möglichst hohe Lichtstärke zu erzielen, andererseits jedoch die verwendete Strahlungsquelle zu schonen, kennzeichnet sich eine besonders vorteilhafte Ausführungsform der Erfindung dadurch, daß die vorzugsweise als Deuteriumlampe ausgebildete Strahlungsquelle mit einem deutlich unterhalb der Belastungsgrenze liegenden, jedoch einen Dauerbetrieb gewährleistenden niedrigen Grundgleichstrom beaufschlagt ist, dem in bestimmten Zeitabständen die Strahlungsquelle kurzzeitig überlastende einzelne Gleichstromimpulse überlagert werden.

Der Erfindung liegt also weiter der Gedanke zugrunde, die verwendete Lampe kurzzeitig zu überlasten und in diesem Bereich eine Messung der spektralen Zusammensetzung auf der Meßstrecke vorzunehmen, während zwischen den rechteckimpulsförmigen Überlastungsabschnitten die verwendete Strahlungsquelle nur mit einem minimalen, gerade zum Aufrechterhalten des Brennens erforderlichen Grundstrom zu beaufschlagen.

Während die vorerwähnte Messung mit Einzel-Rechteck-Gleichstromimpulsen für die Erfassung des ultravioletten Spektralbereiches erforderlich ist, wird erfindungsgemäß für die Staubmessung im sichtbaren Teil des Spektrums weiter vorgesehen, daß dem Grundgleichstrom in zwischen den bestimmten Zeitabständen liegenden Perioden Impulszüge überlagert sind.

Die Erfindung berücksichtigt auf diese Weise, daß eine Deuteriumlampe nicht mit Wechselstrom beaufschlagt werden kann. Dadurch, daß dem niedrigen Gleich-Grundstrom aus Einzelimpulsen bestehende Impulszüge überlagert werden, kann auch mit einer Deuteriumlampe Wechsellicht erzeugt werden, wie es bei der Staubmessung zweckmäßigerweise verwendet wird, um die Einflüsse von Umgebungslicht auszuschalten.

Die Erfindung wird im folgenden beispielsweise anhand der Zeichnung beschrieben; in dieser zeigt:

Fig. 1    einen teilweise schematischen vertikalen Schnitt eines erfindungsgemäßen Gasmeßgerätes entlang der optischen Achsen der einzelnen für die Hauptmessung verwendeten Lichtbündel, wobei die einzelnen optischen Elemente sich in den Positionen für eine Reichweite von 0,85 bis 4,90 m befinden,

Fig. 2    einen zu Fig. 1 analogen Schnitt des gleichen Gasmeßgerätes, wobei jedoch die einzelnen optischen Elemente für eine Reichweite von 4,5 bis 13 m ausgewählt, angeordnet und fixiert sind.

Fig. 3    einen etwas vergrößerten Schnitt nach Linie III-III in Fig. 1,

Fig. 4    eine schematische Ansicht nach Linie IV-IV in Fig. 3, wobei zusätzlich weitere Bauelemente gezeigt sind, und

Fig. 5    einen etwas vergrößerten Schnitt nach Linie V-V in Fig. 1.

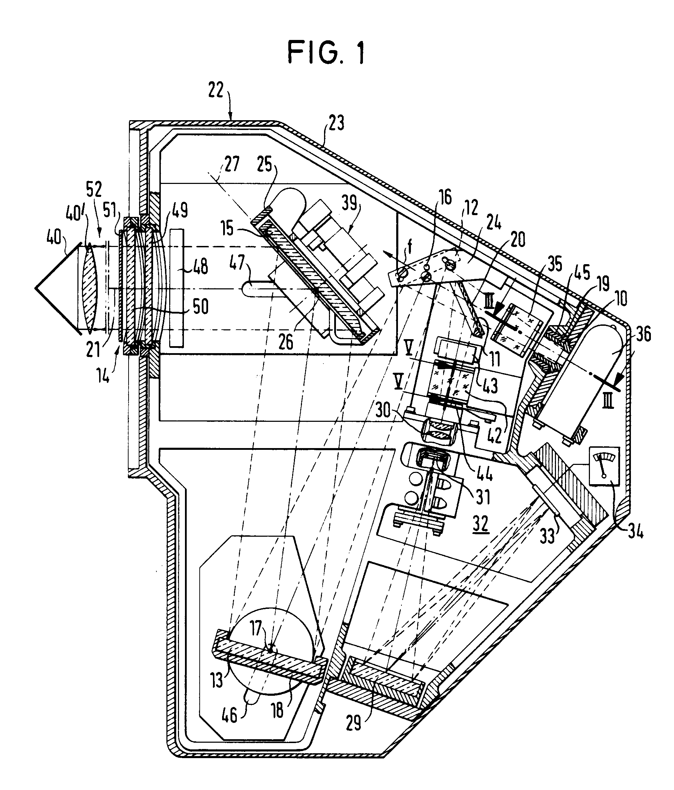

Nach Fig. 1 ist eine um ca. 30° zur Vertikalen schräggestellte Deuteriumlampe 36 mit einem davor angeordneten Sendekondensor 19 zu einer vorjustierten Einheit 10 verbunden, die ohne Nachjustage ausgewechselt werden kann.

Die als Strahlungsquelle dienende Deuteriumlampe 36 wird mit einem stabilisierten Gleich-Grundstrom von etwa 120 bis 180 mA beaufschlagt, dem in bestimmten zeitlichen Abständen von z.B. 3 sec Gleichstrom-Rechteckimpulse von 0,8 bis 2 A überlagert werden, welche beispielsweise 0,3 sec lang sind. Während dieser Gleichstromimpulse erfolgt die spektrale Messung im Ultraviolettbereich.

Zwischen zwei Gleichstrom-Rechteckimpulsen wird der GleichGrundstrom zeitweise von Impulszügen mit beispielsweise zehn Impulsen und einer Frequenz von etwa 10 kHz überlagert. Auf diese Weise entstehen Lichtimpulse, die für die später beschriebene Staubmessung Verwendung finden.

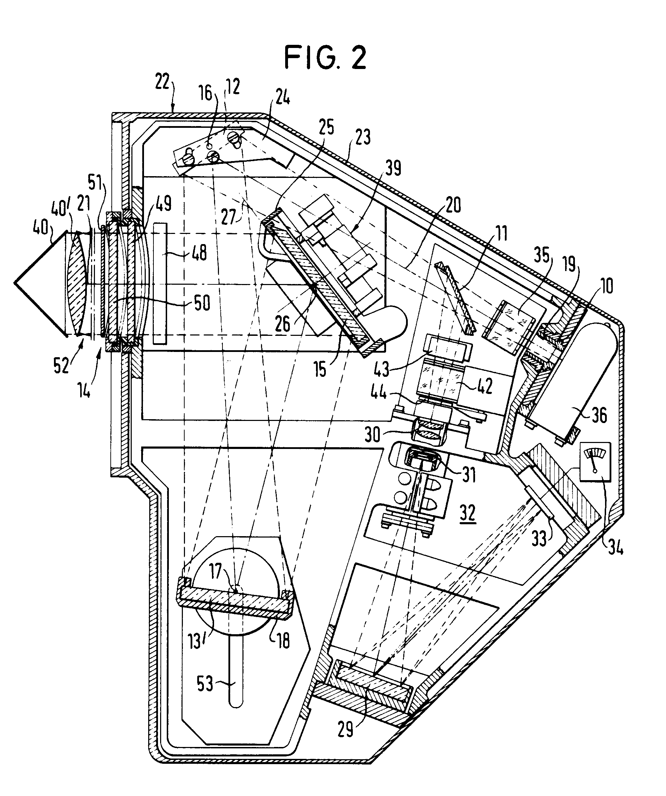

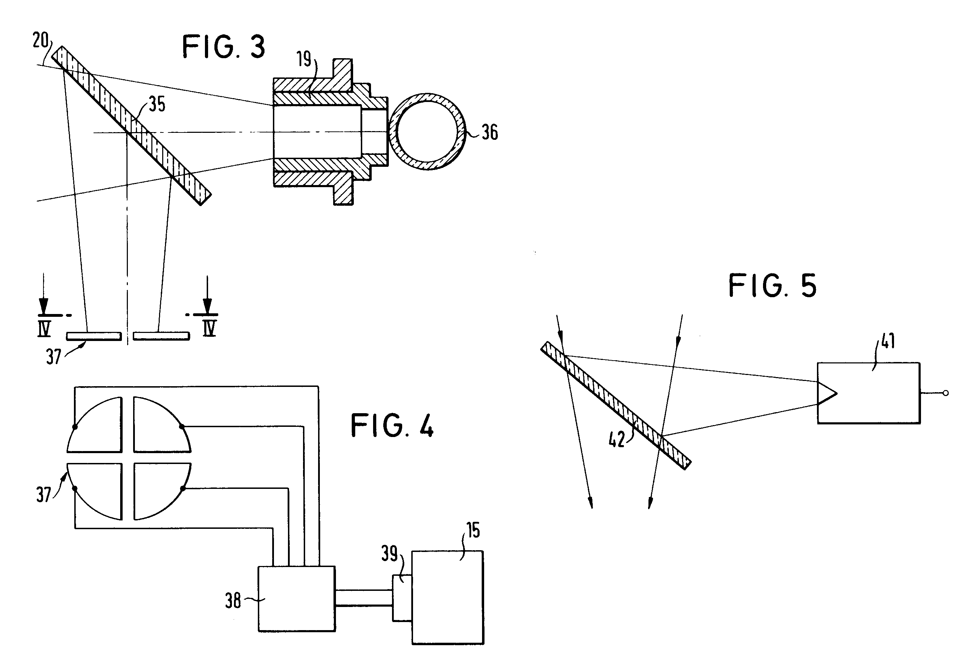

Nach dem Sendekondensor 19 ist eine schräggestellte, entspiegelte Quarzglasplatte 35 im Sendestrahlungsbündel 20 angeordnet, die einen Teil der Empfangsstrahlung senkrecht zur Zeichnungsebene der Fig. 1 und 2 in der später anhand der Fig. 3, 4 erläuterten Weise ausspiegelt.

Der auch ultraviolettes Licht durchlassenden Quarzglasplatte 35 folgt ein spektralneutraler Strahlenteiler 11. Der vom Strahlenteiler 11 durchgelassene Teil des Sendestrahlungsbündel 20 gelangt auf einen Umlenkspiegel 12, der in einer Haltevorrichtung 24 um eine senkrecht auf der Ebene der Fig. 1 und 2 stehende Kippachse 16 um einen Winkel von 10 bis 20° begrenzt verschwenkbar und in der eingestellten Position fixierbar angeordnet ist. Im Mittel ist der Umlenkspiegel 12 um etwa 45° zur Lichtauftreffrichtung f gekippt.

Der Halter 24 ist an der schrägen oberen Seite 23 des Gehäuses 22 innen lösbar befestigt und kann außer der in Fig. 1 ersichtlichen Position im unteren Bereich der oberen Seite 23 gemäß Fig. 2 auch im oberen Bereich der Seite 23 fixiert werden.

Der Umlenkspiegel 12 reflektiert das empfangene Sendelicht zu einem im unteren Bereich des Gehäuses 22 angeordneten Objektivreflektor 13, bei dem es sich zweckmäßigerweise um einen insbesondere sphärischen Hohlspiegel mit einer Brennweite von 31,5 cm handelt. Der Objektivreflektor 13 ist in einer Halterung 18 angeordnet und mit dieser um eine senkrecht auf der Ebene der Fig. 1 und 2 stehende Verstellachse 17 verstellbar. Ein in Richtung der empfangenen Strahlung verlaufendes Langloch 46 ermöglicht es weiter, den Abstand des Objektivreflektors 13 von dem Umlenkspiegel 12 in gewissen Grenzen zu verändern.

Der Objektivreflektor 13 reflektiert die vom Umlenkspiegel 12 empfangene Strahlung annähernd senkrecht zu einem im wesentlichen darüber unter etwa 45° zur Horizontalen angeordneten Nachführspiegel 15, der in einer Haltevorrichtung 25 angeordnet ist, welche durch Anordnung in einem im wesentlichen horizontalen Langloch 47 in Richtung auf die in gleicher Höhe befindliche Strahlungsdurchtrittsöffnung 14 des Gehäuses 22 verschiebbar und um eine senkrecht auf der Ebene der Fig. 1 und 2 stehende Stellachse 26 kippbar ist. Nach Einstellung auf einen bestimmten Reichweitebereich ist die Haltevorrichtung 25 relativ zum Gehäuse 22 fixiert.

Der Nachführspiegel 15 ist jedoch innerhalb der Haltevorrichtung 25 um zwei senkrecht aufeinanderstehende Stellachsen 26, 27 begrenzt verstellbar angeordnet, wobei die Verstellung um die beiden Stellachsen 26, 27 durch eine Steuermotoranordnung 39 bewirkt werden kann.

In der Strahlungsdurchtrittsöffnung 14 bzw. an ihr sind hintereinander angeordnet ein Nullpunktreflektor 48, ein Fenster 49, eine aus- und einfahrbare Scheibe 50 und eine Optikkopfblende 51.

Nach dem Austreten aus der Strahlungsdurchtrittsöffnung 14 verläuft das Austrittsstrahlungsbündel 21 durch die Meßstrecke 52, die z.B. durch das Innere eines Kamins gebildet sein kann.

Am Ende der Meßstrecke 52 befindet sich ein Retroreflektor 40, der die auftreffenden Lichtstrahlen in sich selbst zur Lichtdurchtrittsöffnung 14 zurückwirft. Im gezeigten Ausführungsbeispiel besteht der Retroreflektor 40 aus einem einzelnen Tripelspiegel, dem eine Linse 40′ vorgeschaltet ist, deren Brennweite dem doppelten Abstand des Retroreflektors 40 von der Strahlungsdurchtrittsöffnung 14 entspricht. Die Linse 40′ bildet die Strahlungsdurchtrittsöffnung 14 im Maßstab 1 : 1 auf sich selbst ab. Auf diese Weise wird ein Autokollimationsstrahlengang gebildet, d.h., daß die vom Retroreflektor 40 reflektierte Strahlung erneut durch die Meßstrecke 52 hindurch verläuft und auf dem gleichen Wege wie die Sendestrahlung bis zum Strahlenteiler 11 zurückgelangt, von wo sie im wesentlichen nach unten zum Polychromator 32 reflektiert wird.

Unmittelbar im Anschluß an den Strahlenteiler 11 ist nach der Auslenkung des Empfangslichtes eine ein- und ausschwenkbare Referenzküvette 43 und danach eine für UV-Licht entspiegelte, sichtbares Licht reflektierende dichroitische schräggestellte Quarzglasplatte 42 vorgesehen, welche den sichtbaren Teil der Empfangsstrahlung senkrecht zur Zeichnungsebene der Fig. 1 und 2 in der später anhand von Fig. 5 beschriebenen Weise auslenkt.

Der Quarzglasplatte 42 folgt eine Schwenkblende 44, an welche sich im Strahlengang des Empfangslichtes der Empfangskondensor 30 anschließt. Es ist auch möglich, die Schwenkblende an anderer geeigneter Stelle, z.B. zwischen dem Sendekondensor 19 und der Quarzplatte 35 anzuordnen.

Die Blende der Deuteriumlampe 36 wird durch den Sendekondensor 19 vergrößert in den Objektivreflektor 13 abgebildet.

Der Objektivreflektor 13 ist weiter so angeordnet, daß er den Sendekondensor 19 vergrößert in den Reflektor 40 abbildet. Der Empfangskondensor 30 bildet den Objektivreflektor 13 in den Eintrittsspalt 31 des Polychromators 32 ab. Vom Eintrittsspalt 31 gelant die Empfangsstrahlung zu dem darunter etwa in Höhe des Objektivreflektors 13 angeordneten Gitter 29 des Polychromators 32, von wo die Empfangsstrahlung nach Wellenlängen geordnet zu einer Photoempfangsanordnung 33 gebeugt wird, die aus einer Reihe von einzelnen, hintereinander angeordneten Photoempfängern 33′ besteht, die mit den übrigen Bauteilen in einer Ebene, nämlich der Zeichnungsebene der Fig. 1 und 2 liegen und sich in Richtung der unterschiedlichen Beugungswinkel des Empfangslichtes erstrecken.

Aufgrund der erfindungsgemäßen Ausbildung liegt die Photoempfangsanordnung 33 knapp unter der Lampe 36, während der Polychromator 32 insgesamt in dem durch die Lampe 36, den Nachführspiegel 15 und den Objektivreflektor 13 definierten dreiecksförmigen Raum untergebracht ist, wobei sich das Gitter 29 etwa in Höhe des Objektivreflektors 13 befindet.

Nach den Fig. 3 und 4 wird der durch den Strahlenteiler 11 in Richtung des Sendekondensors 19 hindurchgehende Teil der Empfangsstrahlung von der schräg angeordneten Quarzglasplatte 35 auf ein Vier-Quadranten-Photoelement 37 gelenkt, welches an eine Steuerschaltung 38 angeschlossen ist, die die Steuermotoranordnung 39 des Nachführspiegels 15 derart ansteuert, daß durch entsprechende Kippung des Nachführspiegels 15 um die Stellachsen 26, 27 das Austrittslichtbündel 21 stets auf dem Retroreflektor 40 zentriert wird. Optisch befindet sich das Vier-Quadranten-Photoelement 37 an der gleichen Stelle wie der Sendekondensor 19, so daß der Retroreflektor 40 durch den Objektivreflektor 13 auf dem Vier-Qudranten-Photoelement 37 abgebildet wird.

Nach Fig. 5 spiegelt die weitere Quarzglasplatte 42 einen Teil des Empfangslichtes zu einem Halbleiterdetektor 41, welcher entsprechend der Augenempfindlichkeit grün befiltert sein sollte, um so an seinem elektrischen Ausgang ein für den Staubgehalt der Abgase auf der Meßstrecke 52 repräsentatives Signal abzugeben.

Die Arbeitsweise des beschriebenen Gasmeßgerätes ist wie folgt:

Das Gerät arbeitet nach dem Autokollimationsprinzip, d.h., daß der in den Fig. 1 und 2 eingezeichnete Strahlengang sowohl für das Sende- als auch für das Empfangslicht gilt.

In Fig. 1 ist der Umlenkspiegel 12 in seiner ersten Stellung dargestellt, in der er das Licht vor dem Nachführspiegel 15 schräg nach unten zum Objektivreflektor 13 reflektiert, welcher in diesem Fall eine Brennweite von 31,5 cm besitzt. Der Objektivreflektor 13 parallelisiert das von der Lampe 36 und dem Sendekondensor 19 kommende Licht und führt es über den Nachführspiegel 15 durch die Strahlungsdurchtrittsöffnung 14 hindurch zum Retroreflektor 40. Die Empfangsstrahlung geht denselben Weg, wird jedoch vom Strahlenteiler 11 zum Polychromator 32 umgelenkt.

Der auf das Vier-Quadranten-Photoelement nach den Fig. 3 und 4 auftreffende Teil der Empfangsstrahlung gewährleistet eine automatische Ausrichtung des Nachführspiegels 15 auf den Retroreflektor 40.

Auf diese Weise wird bei einem Strahldurchmesser von 6 cm mit dem beschriebenen Gasmeßgerät eine Reichweite von 0,85 m bis 1,4 m ermöglicht. Mit einem anderen Objektivreflektor 13 von 40 cm Brennweite kann ein weiterer Reichweitenbereich von 1,4 bis 4,9 m erfaßt werden.

Sollen bei einem Strahldurchmesser von 7 cm Reichweiten von 4,5 bis 13 m erfaßt werden, so muß nach Fig. 2 der Umlenkspiegel 12 in seine zweite Stellung am oberen Ende des Gehäuses 22 verschoben und dort fixiert werden. Weiter muß der Umlenkspiegel 12 um die Achse 16 entgegen dem Uhrzeigersinn gekippt werden, damit das von ihm empfangene Sendelicht zum Objektivreflektor 13′ gelangt, welcher zur Erfassung des größeren und weiter entfernten Reichweitenbereiches eine größere Brennweite von 50 bzw. 61 cm aufweist. Er stellt das einzige bei Änderung des Reichweitenbereiches auszuwechselnde optische Bauelement dar.

Nach Fig. 2 ist der Objektivreflektor 13′ bzw. seiner Halterung 18 nicht nur innerhalb des aus Fig. 1 ersichtlichen Langloches 46 sondern auch in Richtung eines weiteren Langloches 53 im wesentlichen vertikal verschiebbar, welches angesichts der größeren Brennweite des Objektivreflektors 13′ deutlich länger als das schrägstehende Langloch 46 ist.

Außerdem muß der die längere Brennweite aufweisende Objektivreflektor 13′ um die senkrecht auf der Zeichnungsebene stehende Verstellachse 17 so geschwenkt werden, daß die reflektierte Strahlung auf den Nachführspiegel 15 fällt und von diesem im wesentlichen horizontal durch die Lichtdurchtrittsöffnung 14 hindurchgeschickt wird.

Für die unterschiedlichen Reichweitenbereiche sind also zwei Objektivreflektoren 13, 13′ mit unterschiedlichen Brennweiten erforderlich. Im übrigen müssen lediglich der Umlenkspiegel 12, der Objektivreflektor 13 und der Nachführspiegel 15 bei der Umstellung des Gerätes vom einen auf den anderen Reichweitenbereich in der erfindungsgemäßen Weise verstellt werden.

Die Steuermotoranordnung 39 besteht aus zwei von der Steuerschaltung 38 angesteuerten Motoren mit Inkrementalgebern sowie Positionssensoren, die eine Korrektur der Spiegelstellung sowie das Anfahren eines Referenzpunktes nach der Geräteabschaltung und im Kontrollzyklus ermöglichen.

Zur überprüfung der Photoempfangsanordnung 33 dient das Spektrum des in der Referenzküvette 43 eingeschlossenen Meßgases. Mittels der Schwenkblende 44 wird der Polychromator 32 nach der Messung abgedeckt und der Dunkelstrom der Einzelempfänger der Photoempfangsanordnung 33 gemessen.

Der Selbstüberwachung des Gerätes dienen in bekannter Weise der Nullpunktreflektor 48 und die Optikkopfblende 51. Im Kontrollzyklus wird der Nullpunktreflektor 43 in den Strahlengang eingeschwenkt und der Nachführspiegel 15 auf den Referenzpunkt gefahren, wobei die Lampenleistung mit Hilfe des erhaltenen Signals auf den Sollwert nachgeregelt wird. Die Feststellung der Grenzflächenverschmutzung erfolgt durch periodisches Aus- und Einfahren der Scheibe 50 und einer nicht dargestellten gleichartigen Scheibe am Meßreflektor. Weiterhin wird im Kontrollzyklus nach Einschwenken der Referenzküvette 43 in den Strahlengang der 70 %-Kalibrierpunkt bestimmt.

Der Optikkopf, der in das Gehäuse 22 eingeschlossen ist, und der Meßreflektor 40 am Ende der Meßstrecke 52 werden mit üblichen Spülluftvorsätzen versehen.

Bei der Messung wird auch der Gleich-Grundstrom erfaßt, d.h. es erfolgt eine Differenzmessung zwischen den Gleichstromimpulsen und dem Gleich-Grundstrom.

Die Erfindung schafft erstmals ein spektralanalytisches Gasmeßgerät, mit dem eine In-situ-Messung kontinuierlich bei hoch aufgelöstem Spektrum durchgeführt werden kann.

## Patentansprüche

1. Spektralanalytisches Gasmeßgerät mit einer elektromagnetischen Strahlungsquelle (36), deren Spektrum zumindest die für die Messung erforderlichen Spektralbereiche der zu bestimmenden Gase aussendet, einem danach angeordneten Sendekondensor (19), einem Objektiv (13, 13'), welches den Kondensor durch eine Strahlungsdurchtrittsöffnung (14) hindurch in einen am Ende der Meßstrecke vorgesehenen Reflektor (40) abbildet, und mit einem zwischen Sendekondensor (19), und Objektiv (13, 13') angeordneten Strahlenteiler (20), welcher zumindest einen Teil der vom Reflektor (40) in sich zurückgeworfenen Strahlung zu einem Polychromator (32) lenkt, der die auftreffende Strahlung spektral zerlegt und zu einer Photoempfangsanordnung (33) lenkt, die jeweils einer bestimmten Wellenlänge bzw. einem bestimmten engen Wellenlängenbereich zugeordnete elektrische Signale liefert, welche an eine Auswerteelektronik angelegt sind, die in Abhängigkeit von den empfangenen elektrischen Signalen eine Bestimmung der zu ermittelnden Gase nach Vorhandensein und/oder Menge vornimmt, dadurch **gekennzeichnet,** daß die Strahlung in Senderichtung hinter dem Strahlenteiler (11) auf einen in Sende-Strahlauftreffrichtung (f) zwischen zwei Stellungen verstellbaren Umlenkspiegel (12) auftrifft, welcher die Strahlung zu dem als Objektivreflektor (13, 13') ausgebildeten Objektiv umlenkt, der die Strahlung zu einem gegenüber der Strahlungsdurchtrittsöffnung (14) angeordneten, die auftreffende Strahlung zur Strahlungsöffnung (14) umlenkenden Nachführspiegel (15) lenkt, wobei der Umlenkspiegel (12) zwischen einer ersten Stellung, wo die Strahlung vor dem Nachführspiegel (15) vorbeiläuft, und einer zweiten Stellung, wo die Strahlung hinter dem Nachführspiegel (15) vorbeiläuft, versetzbar und außerdem um eine senkrecht zu der durch Einfalls- und Ausfallsstrahl definierten Ebene stehende Kippachse (16) derart kippbar ist, daS Strahlung jeweils zum Objektivreflektor (13, 13') lenkbar ist, und daß der Objektivreflektor (13, 13') an einer um eine parallel zu der erwähnten Kippachse (16) angeordnete Verstellachse (17) kippbaren und im wesentlichen in Richtung der auftreffenden Strahlung verschiebbaren Halterung (18) auswechselbar angeordnet ist, so daß Objektivreflektoren (13, 13') mit unterschiedlichen Brennweiten angeordnet werden können, wobei vorzugsweise der Objektivreflektor als Hohlspiegel (13, 13') ausgebildet ist und/oder der Strahlenteiler (11) zweckmäßig im Bereich der verlängerten Mittelachse der Strahlungsdurchtrittsöffnung (14) angeordnet ist und der Umlenkspiegel (12) sich bevorzugt in der ersten Stellung unmittelbar in Senderichtung hinter dem Strahlenteilerspiegel (11) befindet.

2. Gasmeßgerät nach Anspruch 1, dadurch **gekennzeichnet,** daß das vom Sendekondensor (19) zum Strahlenteiler (11) und Umlenkspiegel (12) verlaufende Strahlungsbündel (20) einen Winkel von 20° bis 40° und insbesondere etwa 30° mit dem Austrittsstrahlungsbündel (21) einschließt, das vorzugsweise die Seite (23) des Gehäuses (22) im Bereich der Anordnung des Umlenkspiegels (12) ebenfalls den Winkel von 20° bis 40°, insbesondere etwa 30° mit dem Austrittsstrahlungsbündel (21) einschließt, und/oder daß der Umlenkspiegel (12) in der ersten Stellung im Bereich der nach hinten durch den Nachführspiegel (15) hindurch verlängert gedachten Achse des Austrittsstrahlungsbündels (21) oder geringfügig gegen diese Achse vom Objektivreflektor (13, 13') weg versetzt angeordnet ist.

3. Gasmeßgerät nach einem der vorhergehenden Ansprüche, dadurch **gekennzeichnet,**

daß der Umlenkspiegel (12) in der zweiten Stellung zwischen dem Nachführspiegel (15) und der Strahldurchtritts-öffnung (14) mit Abstand zum Nachführspiegel (15) auf der vom Objektivreflektor (13, 13') abgewandten Seite der Achse des Austrittsbündels (21) angeordnet ist und/oder daß der Umlenkspiegel (12) in einem in zwei Stellungen am Gehäuse (22) fixierbaren Halter (24) um die Kippachse (16) verschwenkbar angeordnet ist und/oder daß der Objektivreflektor (13) und seine Halterung (18) auf der vom Umlenkspiegel (12) abgewandten Seite der Achse des Austrittsstrahlungsbündels (21) mit Abstand zum Nachführspiegel (15) in der Weise angeordnet sind, daß der Reflektionswinkel am Objektivreflektor (13, 13') möglichst klein ist, wobei zweckmäßig der Reflektionswinkel am Objektivreflektor (13, 13') 5° bis 7° beträgt.

4. Gasmeßgerät nach einem der vorhergehenden Ansprüche, dadurch **gekennzeichnet,** daß der Nachführspiegel (15) in einer äußeren Haltevorrichtung (25) angeordnet ist, wobei bevorzugt der Nachführspiegel (15) in der äußeren Haltevorrichtung (26) in Richtung der Strahlungsdurchtrittsöffnung (14) verschiebbar am Gehäuse (22) angebracht ist und/oder daß der Nachführspiegel (15) in der äußeren Haltevorrichtung (26) um zwei senkrecht aufeinanderstehende Stellachsen (26, 27) verdrehbar angeordnet ist, wobei bevorzugt der Nachführspiegel (15) durch eine Steuermotoranordnung (39) verdrehbar ist und/oder zweckmäßig die eine Stellachse (26) parallel zur erwähnten Kippachse (16) verläuft und die andere Stellachse (27) senkrecht auf der ersten Stellachse (26) steht und parallel zur Oberfläche des Nachführspiegels (16) verläuft und daß vorzugsweise die Haltevorrichtung (26) in zwei um 180° um die Hochachse verdrehten Stellungen im Gehäuse (22) festlegbar ist.

5. Gasmeßgerät nach einem der vorhergehenden Ansprüche, dadurch **gekennzeichnet,** daß der Strahlteiler (11) die gebündelte Empfangsstrahlung im wesentlichen parallel zu dem vom Umlenkspiegel (12) in der ersten Stellung reflektierten Sendestrahlungsbündel zum Polychromator (32) reflektiert, wobei insbesondere der Strahlenteiler (11) die Empfangsstrahlung zu einem Empfangskondensor (30) reflektiert, der den Objektivreflektor (13) auf den Eintrittsspalt (31) des Polychromators (32) abbildet, und/oder daß das Gitter (29) des Polychromators (32) die Empfangsstrahlung in die gleiche Ebene (Fig. 1, 2) abbeugt, in der auch alle sonstigen Strahlungsbündel verlaufen, und/oder daß im Abstand des Eintrittsspaltes (31) unter den Beugungswinkeln mehrere, die Photoempfangsanordnung (33) bildende Photo-empfänger (33') angeordnet sind, und/oder daß die Strahlungsquelle (36) ultraviolettes Licht emittiert, und/oder daß sich in der Empfangsstrahlung vor dem Nachführspiegel (15) eine schräggestellte, entspiegelte Strahlenteilerplatte (35) befindet, welche die Empfangsstrahlung zu einem Vier-Quadranten-Photoelement (37) auslenkt, das über eine Steuerschaltung (38) den Nachführspiegel (15) derart steuert, daß das Austrittsstrahlungsbündel (21) zentral auf den Reflektor (40) fällt, wobei bevorzugt die Strahlenteilerplatte (35) zwischen dem Strahlenteiler (11) und dem Sendekon densor (19) angeordnet ist und/oder zweckmäßig die Strahlenteilerplatte (35) eine Quarzplatte ist und/oder insbesondere die Strahlenteilerplatte (35) die Empfangsstrahlung senkrecht zur Ebene der Strahlungsbündel zu dem Vier-Quadranten-Photoelement (37) auslenkt.

6.  Gasmeßgerät nach einem der vorhergehenden Ansprüche, bei dem die Strahlungsquelle auch sichtbares Licht emittiert, dadurch **gekennzeichnet**, daß in der Empfangs strahlung nach dem Strahlenteiler (11) eine schräggestellte, für die durchzulassende Strahlung entspiegel-te, sichtbares Licht reflektierende Strahlentei-lerplatte, vorgesehen ist, welche den sichtbaren Teil der Empfangsstrahlung zu einem für sichtbares Licht empfindlichen Halbleiterdetektor (41) auslenkt, der zur Staubgehaltsmessung dient, daß zweckmäßig auch die Strahlenteilerplatte (42) vor dem Empfangskondensor (30) angeordnet ist, daß insbesondere die Strahlenteilerplatte (42) für ultraviolettes Licht entspiegelt ist, daß bevorzugt auch die Strahlenteilerplatte eine Quarzglasplatte (42) ist und/oder daß die Strahlenteilerplatte (42) den sichtbaren Teil der Empfangsstrahlung senkrecht zur Ebene der Hauptstrahlungsbündel zu dem Halbleiterdetektor (41) auslenkt.

7.  Gasmeßgerät nach einem der vorhergehenden Ansprüche, dadurch **gekennzeichnet**, daß in das Empfangsstrahlungsbündel hinter dem Strahlenteiler eine ein Meßgas enthaltende Referenzküvette (43) einschwenkbar ist.

8.  Gasmeßgerät nach einem der vorhergehenden Ansprüche, dadurch **gekennzeichnet**, daß die Strahlungsquelle (36) mit dem Sendekondensor (19) zu einer vorjustierten Baueinheit zusammengebaut ist.

9.  Gasmeßgerät nach Anspruch 8, dadurch **ge-**

**kennzeichnet**, daß die Strahlungsquelle (36) als Deuteriumlampe ausgebildet ist.

10. Gasmeßgerät nach einem der vorhergehenden Ansprüche dadurch **gekennzeichnet**, daß die Strahlungsquelle (36) eine Lampe ist, die mit einem deutlich unterhalb der Belastungsgrenze liegenden, jedoch einen Dauerbetrieb gewähr-leistenden niedrigen Grundgleichstrom beauf-schlagt ist, dem in bestimmten Zeitabständen die Strahlungsquelle kurzzeitig überlastende einzelne Gleichstromimpulse überlagert werden, wobei bevorzugt dem Grundgleichstrom in zwischen den bestimmten Zeitabständen liegenden Perioden Impulszüge überlagert sind.

**Claims**

1.  Spectroanalytical gas measuring apparatus comprising a source (36) of electromagnetic radiation the spectrum of which transmits at least the spectral regions required for the gases to be determined; a transmitting condensor (19) positioned after the source; an objective lens (13, 13') which forms an image of the condensor via a radiation passage opening (14) at a reflector (40) provided at the end of the measurement path; and a radiation divider (20) arranged between the condensor (19) and the objective lens (13, 13') for deflecting at least a part of the radiation reflected back on itself by the reflector (40) to a polychromator (32), which splits the incident radiation up into its spectrum components and directs it to a photoreceiver arrangement (33) which delivers electrical signals respectively associated with specific wavelengths or with a specific narrow range of wavelengths; wherein said signals are applied to an electronic evaluation circuit which effects a determination of the presence and/or quantity of the gases to be determined in dependence on the electrical signals received; characterized in that the radiation impinges after the radiation divider (11) in the transmission direction onto a deflecting mirror (12) which is adjustable substantially in the radiation impingement direction (f) between two positions and which deflects the radiation to the objective formed as an objective reflector (13, 13') which directs the radiation to a radiation follow-up mirror (15) which is arranged in front of the radiation passage opening (14) and deflects the incident radiation passage opening (14); in that the deflecting mirror (12) is displaceable between a first position in which the radiation passes in front of the follow-up mirror (15) and a second position in which the radiation passes behind the follow-up mirror (15), and is also tiltable about a tilt axis (16) perpendicular to a plane defined by the incident and emergent radiations in such a way that radiation is in each case deflectable to the objective reflector (13, 13'); and in that the objective reflector (13, 13') is interchangeably arranged on a holder (18) tiltable about an adjustment axis (17) arranged parallel to the said tilt axis (16) and displaceable substantially in the direction of the incident radiation, such that objective reflections (13, 13') of different focal lengths can be arranged, the objective reflector being preferably realised as a concave mirror (13, 13') and/or the radiation divider (11) being expediently arranged in the region of the extension of the middle axis of the radiation passage opening (14) and the deflecting mirror (12) being preferably located in the first position directly behind the radiation divider mirror (11) in the transmission direction.

2. Gas measuring apparatus in accordance with claim 1, characterized in that the beam of radiation (20) extending from the transmitting condensor (19) to the beam divider (11) and the deflecting mirror (12) subtends an angle of 20 to 40° and in particular of approximately 30° to the emergent radiation beam (21); in that the side (23) of the housing (22) in the region of the arrangement of the deflecting mirror (12) likewise preferably subtends the angle of 20 to 40° and in particular of approximately 30° to the emergent radiation beam (21); and/or in that the deflecting mirror (12) is arranged in the first position in the region of the rearward extension of the imaginary axis of the emergent radiation beam (21) through the follow-up mirror (15), or is arranged slightly offset from this axis away from the objective reflector (13, 13').

3. Gas measuring apparatus in accordance with one of the preceding claims, characterized in that the deflecting mirror (12) is arranged in the second position between the follow-up mirror (15) and the radiation passage opening (14) at a distance from the follow-up mirror (15) at the side of the axis of the emergent beam (21) remote from the objective reflector (13, 13'); and/or in that the deflecting mirror (12) is pivotably arranged about the tilt axis (16) in a holder (24) which can be fixed in two positions on the housing (22); and/or in that the objective reflector (13) and its holder (18) are arranged at the side of the axis of the emergent radiation beam (21) remote from the deflection mirror (12) and at a distance from the follow-up mirror (15) in such a way that the angle of reflection at the objective reflector (13, 13') is as small as possible and expediently amounts to 5 to 7°.

4. Gas measuring apparatus in accordance with one of the preceding claims, characterized in that the follow-up mirror (15) is arranged in an outer holding device (25), wherein the follow-up mirror (15) in the outer holding device (26) is preferably mounted on the housing (22) so that it is displaceable in the direction of the radiation passage opening (14); and/or in that the follow-up mirror (15) arranged in the outer holding device (25) is pivotable about two positioning axes (26, 27) which are perpendicular to one another, the follow-up mirror (15) being preferably pivotable by a control motor arrangement (39); and/or in that the one positioning axis (26) extends expediently parallel to the said tilt axis (16) and the other positioning axis (27) extends perpendicular to the first positioning axis (26) and parallel to the surface of the follow-up mirror (16); and in that the holding device (26) can be fixed in the housing (22) in two positions rotated through 180° relative to one another about the vertical axis.

5. Gas measuring apparatus in accordance with one of the preceding claims, characterized in that the radiation divider (11) reflects the bundled received radiation to the polychromator (32) substantially parallel to the transmitted radiation beam reflected by the deflecting mirror (12) in the first position, with the beam divider (11) reflecting in particular the received radiation to a receiving condensor (30) which forms an image of the objective reflector (13) on the entry gap (31) of the polychromator (32); and/or in that the grating (29) of the polychromator (32) diffracts the received radiation into the same plane (Figs. 1, 2) in which all the other radiation beams also extend; and/or in that several photoreceivers (33') which form the photoreceiver arrangement (33) are arranged at the angles of diffraction at a distance from the entry gap (31); and/or in that the radiation source (36) emits ultraviolet light; and/or in that an inclined, demirrored, radiation divider plate (35) is located in the received radiation in front of the follow-up mirror (15), and deflects the received radiation to a four-quadrant photoelement (37) which steers the follow-up mirror (15) via a control circuit (38) in such a way that the emergent radiation beam (21) falls centrally onto the reflector (30); wherein the radiation divider plate (35) is preferably arranged between the radiation divider (11) and the transmission condensor (19), and/or the radiation divider plate (35) is expediently a quarz plate, and/or the radiation divider plate (35) deflects in particular the received radiation perpendicular to the plane of the radiation beams to the four-quadrant photoelement (37).

6. Gas measuring apparatus in accordance with one of the preceding claims wherein the radiation source also emits visible light, characterized in that an inclined radiation divider plate which is demirrored for the radiation to be transmitted, but which reflects visible light, is provided in the received radiation after the beam divider (11), and deflects the visible part of the received radiation outwardly to a semiconductor detector (41) which is sensitive to visible light and which serves for dust content measurement; in that the radiation divider plate (42) is arranged expediently in front of the reception condensor (30); in that the radiation divider plate (42) is in particular demirrored for ultraviolet light; in that the radiation divider plate is preferably also a quarz glass plate (42); and/or in that the radiation divider plate (42) deflects the visible part of the received radiation outwardly perpendicular to the plane of the main radiation beam to the four-quadrant semiconductor detector (41).

7. Gas measuring apparatus in accordance with one of the preceding claims, characterized in that a reference cell (43) containing a measurement gas can be pivoted into the received radiation beam after the beam divider.

8. Gas measuring apparatus in accordance with one of the preceding claims, characterized in that the radiation source (36) is assembled with the transmitting condensor (19) into a preadjusted constructional unit.

9. Gas measuring apparatus in accordance with claim 8, characterized in that the radiation source (36) is constructed as a deuterium lamp.

10. Gas measuring apparatus in accordance with one of the preceding claims, characterized in that the radiation source (36) is a lamp which is energised by a low basic DC current which lies substantially below the loading limit, but which however permits permanent operation, on which individual DC pulses are superimposed at specific time intervals which overload the radiation source for a short period of time, and pulse trains are preferably superimposed on the basic DC current in periods lying between said specific time intervals.

**Revendications**

1. Appareil spectro-analytique de mesure de gaz comprenant une source (36) de rayonnement électromagnétique, dont le spectre émet au moins les radiations spectrales nécessaires pour la mesure des gaz à déterminer, un condensateur d'émission (19) placé en aval de la source, un objectif (13, 13') qui forme l'image du condensateur, à travers une ouverture de passage (14) de faisceau, sur un réflecteur (40) prévu à l'extrémité du trajet de mesure, et un diviseur de faisceau (20) agencé entre le condenseur d'émission (19) et l'objectif (13, 13'), ce diviseur de faisceau déviant vers un polychromateur (32) au moins une partie de la lumière que le réflecteur réfléchit vers lui-même, ledit polychromateur décomposant le spectre sous la forme de ses composantes et le dirigeant vers un photorécepteur (33) qui délivre des signaux électriques associés respectivement à des longueurs d'onde spécifiques ou à des plages étroites spécifiques de longueurs d'onde, dans lequel lesdits signaux sont appliqués à un circuit de traitement électronique qui effectue une détermination de la présence et/ou de la quantité des gaz à déterminer en fonction des signaux électriques reçus, caractérisé en ce que le faisceau tombe après le diviseur de faisceau (11), dans la direction d'émission, sur un miroir de renvoi (12) qui peut être réglé entre deux positions dans la direction où tombe le faisceau émis et qui dévie le faisceau vers l'objectif réalisé sous la forme d'un réflecteur d'objectif (13, 13'), ledit objectif déviant le faisceau vers un miroir de suivi (15) qui est agencé en face de l'ouverture de passage (14) pour le faisceau et qui dévie le faisceau incident en direction de l'ouverture (14) de faisceau, le miroir de renvoi (12) pouvant être déplacé entre une première position dans laquelle le faisceau passe devant le miroir de suivi (15) et une seconde position dans laquelle le faisceau passe derrière le miroir de suivi (15) et pouvant être en outre pivoté autour d'un axe de pivotement (16) perpendiculaire au plan défini par les rayons incidents et émergents, de telle manière que le rayonnement peut être dévié respectivement vers le réflecteur d'objectif (13, 13'), et en ce que le réflecteur d'objectif (13, 13') est monté de façon interchangeable sur un support (18) qui peut être pivoté autour d'un axe de réglage (17) parallèle à l'axe de pivotement précité (16) et qui peut être déplacé sensiblement dans la direction du rayonnement incident, de sorte que l'on peut monter des réflecteurs d'objectif (13, 13') de longueurs focales différentes, le réflecteur d'objectif étant de préférence réalisé sous la forme d'un miroir concave (13, 13') et/ou en ce que le diviseur de faisceau (11) est agencé de façon appropriée dans la région du prolongement de l'axe médian de l'ouverture de passage (14) de faisceau et en ce que le miroir de renvoi (12) est de préférence situé dans la première position directement derrière le miroir du diviseur de faisceau (11) dans la direction d'émission.

2. Appareil selon la revendication 1, caractérisé en ce que le faisceau de rayonnement (20) qui va depuis le condensateur d'émission (19) jusqu'au diviseur de rayonnement (11) et au miroir de renvoi (12) forme avec le faisceau de rayonnement de sortie (21) un angle de 20 à 40 degrés et en particulier environ 30 degrés, en ce que de préférence le côté (23) du boîtier (22) dans la région où est monté le miroir de renvoi (12) forme également avec le faisceau de rayonnement de sortie (21) un angle de 20 à 40 degrés, en particulier environ 30 degrés, et/ou en ce que le miroir de renvoi (12) est agencé dans la région de l'axe imaginaire, prolongé vers l'arrière à travers le miroir de suivi (15), du faisceau de rayonnement de sortie (21) ou est légèrement décalé par rapport à cet axe en éloignement du réflecteur d'objectif (13, 13').

3. Appareil selon l'une des revendications précédentes, caractérisé en ce que le miroir de renvoi (12) est agencé dans la seconde position entre le miroir de suivi (15) et l'ouverture de passage (14) de rayonnement et à distance du miroir de suivi (15) du côté de l'axe du faisceau de sortie (21) éloigné du réflecteur d'objectif (13, 13'), et/ou en ce que le miroir de renvoi (12) est monté pivotant autour de l'axe de pivotement (16) dans un support (24) qui peut être fixé en deux positions au boîtier (22), et/ou en ce que le réflecteur d'objectif (13) et son support (18) sont agencés sur le côté de l'axe du faisceau de rayonnement de sortie (21) éloigné du miroir de renvoi (12) et à distance du miroir de suivi (15) de telle manière que l'angle de réflexion sur le réflecteur d'objectif (13, 13') est le plus faible possible, l'angle de réflexion sur le réflecteur d'objectif (13, 13') étant de façon appropriée compris entre 5 et 7 degrés.

4. Appareil selon l'une des revendications précédentes, caractérisé en ce que le miroir de suivi (15) est monté dans un dispositif de maintien extérieur (25), le miroir de suivi (15) étant de préférence monté sur le boîtier (22) dans le dispositif de maintien extérieur (26) de façon à pouvoir être déplacé en direction de l'ouverture de passage (14) de rayonnement, et/ou en ce que le miroir de suivi (15) est monté dans le dispositif de maintien extérieur (26) de manière à pivoter autour de deux axes de réglage (26, 27) perpendiculaires l'un à l'autre, le miroir de suivi (15) pouvant de préférence être pivoté au moyen d'un agencement à moteur de commande (39), et/ou en ce que l'un des axes de réglage (26) s'étend de façon appropriée parallèlement à l'axe de pivotement précité (16) et l'autre axe de réglage (27) est perpendiculaire au premier axe de réglage (26) et s'étend parallèlement à la surface du miroir de suivi (16), et en ce que le dispositif de maintien (26) peut être fixé de préférence dans le boîtier (22) en deux positions tournées de 180 degrés autour de l'axe vertical.

5. Appareil selon l'une des revendications précédentes, caractérisé en ce que le diviseur de rayonnement (11) réfléchit le rayonnement incident en faisceau vers le polychromateur (32) sensiblement parallèlement au faisceau de rayonnement émis réfléchi par le miroir de renvoi (12) dans la première position, dans lequel en particulier le diviseur de rayonnement (11) réfléchit le rayonnement incident vers un condensateur de réception (30) qui forme l'image du réflecteur d'objectif (13) sur la fente d'entrée (31) du polychromateur (32), et/ou en ce que le réseau (29) du polychromateur (32) diffracte le rayonnement incident dans le même plan (figures 1, 2) dans lequel s'étendent également tous les faisceaux de rayonnement particuliers, et/ou en ce que plusieurs photorécepteurs (33') constituant l'agencement photorécepteur (33) sont agencés à distance de la fente d'entrée (31) sous l'angle de diffraction, et/ou en ce que la source de rayonnement (36) émet de la lumière ultraviolette, et/ou en ce qu'une plaquette (35) de division de rayonnement oblique et non-réflectrice est située dans le rayonnement incident avant le miroir de suivi (15), qui dévie le rayonnement incident vers un photoélément (37) à quatre secteurs, lequel commande au moyen d'un circuit de commande (38) le miroir de suivi (15) de telle manière que le faisceau du rayonnement de sortie (21) tombe au centre du réflecteur (40), la plaquette (35) de division de rayonnement étant agencée de préférence entre le diviseur de rayonnement (11) et le condensateur d'émission (19), et/ou en ce que la plaquette (35) de division de rayonnement est de façon appropriée une plaquette de quartz, et/ou en ce que la plaquette (35) de division de rayonnement dévie en particulier le rayonnement incident perpendiculairement au plan des faisceaux de rayonnement en direction du photoélément (37) à quatre secteurs.

6. Appareil selon l'une des revendications précédentes, dans lequel la source de rayonnement émet également de la lumière visible, caractérisé en ce qu'une plaquette de division de rayonnement oblique, non-réflectrice vis-à-vis du rayonnement à transmettre et réfléchissant la lumière visible, est prévue dans le rayonnement incident après le diviseur de rayonnement (11), cette plaquette déviant la partie visible du rayonnement incident vers un détecteur (41) à semi-conducteur sensible à la lumière visible qui sert à la mesure de la teneur en poussières, en ce que de façon appropriée la plaquette (42) de division de rayonnement est également agencée avant le condensateur de réception (30), en ce que la plaquette (42) de division de rayonnement est en particulier non-réflectrice vis-à-vis de la lumière ultraviolette, en ce que la plaquette de division de rayonnement est de préférence également une plaquette (42) en verre de quartz, et/ou en ce que la plaquette (42) de division de rayonnement dévie la partie visible du rayonnement incident perpendiculairement au plan des faisceaux principaux de rayonnement en direction du détecteur (41) à semi-conducteur.

7. Appareil selon l'une des revendications précédentes, caractérisé en ce qu'une cuvette de référence (43) qui contient un gaz de mesure peut être amenée par pivotement dans le faisceau de rayonnement incident derrière le diviseur de rayonnement.

8. Appareil selon l'une des revendications précédentes, caractérisé en ce que la source de rayonnement (36) est assemblée avec le condensateur d'émission (19) en une unité préréglée.

9. Appareil selon la revendication 8, caractérisé en ce que la source de rayonnement (36) est réalisée sous la forme d'une lampe au deutérium.

10. Appareil selon l'une des revendications précédentes, caractérisé en ce que la source de rayonnement (36) est une lampe qui est soumise à un courant continu de base faible, situé largement au-dessous de la limite de charge mais assurant un fonctionnement permanent, auquel sont superposées à intervalles déterminés des impulsions individuelles de courant continu qui surchargent brièvement la source de rayonnement, des trains d'impulsions étant de préférence superposés au courant continu de base, qui ont des périodes situées entre les intervalles déterminés.

# FIG. 1

FIG. 2

FIG. 3

FIG. 4

FIG. 5